# EUROPEAN PATENT SPECIFICATION

(11) **EP 4 591 611 B1**
(45) Date of publication and mention of the grant of the patent: **02.09.2026**
(21) Application number: 22803320.5
(22) Date of filing: 24.10.2022
(51) Int. Cl.: H04W 28/02, H04L 47/2416

(54) **QUALITY OF SERVICE OF EXTENDED REALITY MEDIA OVER A WIRELESS COMMUNICATION NETWORK**
DIENSTQUALITÄT VON MEDIEN DER ERWEITERTEN WIRKLICHKEIT ÜBER EIN DRAHTLOSES KOMMUNIKATIONSNETZ
QUALITÉ DE SERVICE DES MÉDIAS À RÉALITÉ ÉTENDUE SUR UN RÉSEAU DE COMMUNICATION SANS FIL

(30) Priority: 20.09.2022 GR 20220100766
(43) Date of publication of application: 30.07.2025
(73) Proprietor: Lenovo (Singapore) Pte. Ltd., Singapore 556741 (SG)
(72) Inventor: BASU MALLICK, Prateek, 63303 Dreieich (DE); STOICA, Razvan-Andrei, 45130 Essen (DE); LÖHR, Joachim, 65203 Wiesbaden (DE); KUCHIBHOTLA, Ravi, Chicago, Illinois 60680 (US); KARAMPATSIS, Dimitrios, Ruislip Middlesex HA4 6ED (GB); BAGHERI, Hossein, Urbana, Illinois 61802 (US)
(74) Representative: Openshaw & Co.
(86) International application number: PCT/EP2022/079616
(87) International publication number: WO 2024/061475

(56) References cited:
- WO-A1-2018/202205
- CATT: "New Solution for KI#4/5: Sub-QoS Flow based QoS Architecture and Policy Control", vol. SA WG2, no. e-meeting;, 29 March 2022 (2022-03-29), XP052133549, Retrieved from the Internet <URL:https://ftp.3gpp.org/tsg_sa/WG2_Arch/TSGS2_150E_Electronic_2022-04/Docs/S2-2202715.zip>

## Description

### Field

The subject matter disclosed herein relates generally to the field of applying quality of service requirements to extended reality media carried over a wireless communication network. This document defines a method in a user equipment of a wireless communication network and a user equipment of a wireless communication network.

### Background

Herein, eXtended Reality (XR) is used as an umbrella term for different types of realities of which Virtual Reality, Augmented Reality, and Mixed Reality are examples. XR application traffic is subject to strict bandwidth and latency limitations in order to deliver an appropriate Quality of Service and Quality of Experience to an end user of an XR service. Bandwidth and latency limitations are examples of Quality of Service requirements. Such Quality of Service (QoS) requirements can make delivery of XR application traffic over a wireless communication network challenging.

In the context of XR media traffic, SA2 recently introduced the concept of the Protocol Data Unit (PDU) set. A PDU set groups a series of PDUs carrying a unit of information at the application-level. The unit of information may be an application data unit (ADU) or a service date unit (SDU). PDUs of a PDU set should be, and typically are, treated according to same QoS requirements with associated constraints of delay budget and error rate. This improves the granularity of legacy 5G QoS flow framework allowing the RAN to optimize the mapping between QoS flow and data radio bearers (DRBs) to meet stringent XR media requirements. Typically, XR media requires high-rate transmissions with a short delay budget. The implementation of PDU sets in XR media communication requires on one hand the determination of a PDU set and its composing PDUs, i.e., the identification of the PDU set boundaries, and on the other hand, the application of different QoSs to the different PDU sets inside a particular QoS flow. In legacy communication system all packets of a QoS flow are treated with the same QoS requirement.

CATT, "New Solution for KI#4/5: Sub-QoS Flow based QoS Architecture and Policy Control", S2-2202715, 3GPP TSG-WG SA2 Meeting #150E e-meeting, Elbonia, April 6th - 14th, 2022, proposes a sub-QoS Flow based QoS architecture and policy control for XRM service flow.

WO2018202205A1 discloses an apparatus receives a downlink data packet and determines a service data flow associated with the downlink data packet. The apparatus extracts, from the downlink data packet, a Non-Access Stratum (NAS) Reflective QoS Indication (RQI) indicator that instructs the UE to map a service data flow to the QoS flow. The apparatus further extracts, from the downlink data packet, a Quality of Service (QoS) flow identifier identifying a QoS flow. The apparatus generates a first NAS mapping that maps the service data flow to the QoS flow, in response to a determination that the service data flow is not mapped to the QoS flow at the apparatus. The apparatus further transmits, in accordance with the first NAS mapping, an uplink data packet associated with the service data flow through the QoS flow.

### Summary

For XR media, the same QoS needs to be applied to the PDUs of a PDU Set. However, the inventors have recognized a problem when reflective QoS mapping is used with PDU sets. The Reflective QoS Attribute (RQA) is an optional parameter which indicates that certain traffic (not necessarily all) carried on a particular QoS Flow is subject to Reflective QoS. Only when the RQA is signalled for a QoS Flow, the (radio) access network ((R)AN) enables the transfer of the RQI for AN resource corresponding to this QoS Flow. The RQA may be signaled to NG-RAN via the N2 reference point at UE context establishment in NG-RAN and at QoS Flow establishment or modification.

Disclosed herein are procedures for application of quality of service requirements to extended reality media carried over a wireless communication network. Said procedures may be implemented by a method in a user equipment of a wireless communication network and a user equipment of a wireless communication network. The invention is defined by the appended independent claims.

There is provided a method in a user equipment of a wireless communication network. The method comprises transmitting, via a first data radio bearer, Protocol Data Units (PDUs) of a first PDU set using a first quality of service (QoS) mapping rule. The method further comprises: receiving downlink packets for the data radio bearer containing header information including at least one QoS parameter indicating a second QoS mapping rule; applying the first QoS mapping rule to uplink transmissions on said data radio bearer until the transmission of the last PDU of the first PDU set; and transmitting PDUs of a second PDU set using the second QoS mapping rule.

There is further provided a user equipment of a wireless communication network, the user equipment comprising a transmitter, a receiver, and a processor. The transmitter is arranged to transmit, via a data radio bearer, Protocol Data Units (PDUs) of a first PDU set using a first quality of service (QoS) mapping rule. The receiver is arranged to receive downlink packets for the data radio bearer containing header information including at least one QoS parameter indicating a second QoS mapping rule. The processor is arranged to apply the first QoS mapping rule to uplink transmissions on said data radio bearer until the transmission of the last PDU of the first PDU set. The transmitter is further arranged to transmit PDUs of a second PDU set using the second QoS mapping rule.

This method and corresponding user equipment tend to ensure that the PDUs of a PDU set are treated according to a same set of QoS requirements even when reflective QoS is implemented. That the PDUs of a PDU set are subject to the same QoS requirements and associated constraints of delay budget and error rate is important for the timely delivery of the data contained within the PDU set. This tends to improve the granularity of legacy 5G QoS flow framework allowing the RAN to optimize the mapping between QoS flow and DRBs to meet, for example, stringent XR media requirements such as high-rate transmissions with short delay budget.

### Brief description of the drawings

In order to describe the manner in which advantages and features of the disclosure can be obtained, a description of the disclosure is rendered by reference to certain apparatus and methods which are illustrated in the appended drawings. Each of these drawings depict only certain aspects of the disclosure and are not therefore to be considered to be limiting of its scope. The drawings may have been simplified for clarity and are not necessarily drawn to scale.

Methods and apparatus for applying quality of service requirements to extended reality media carried over a wireless communication network will now be described, by way of example only, with reference to the accompanying drawings, in which:
Figure 1 depicts an embodiment of a wireless communication system for applying quality of service requirements to extended reality media carried over a wireless communication network;
Figure 2 depicts a user equipment apparatus;
Figure 3 depicts further details of the network node;
Figure 4 illustrates a method as presented herein;
Figure 5 illustrates the format of SDAP Data PDU of a downlink packet configured with an SDAP header;
Figure 6 illustrates the format of SDAP Data PDU of an uplink packet configured with an SDAP header;
Figure 7 shows three different possibilities for required QoS applicable to each PDU and PDU Set of a QoS flow;
Figure 8 shows the UE applying the latest update of the mapping rules only at the start of a transmission for the next UL PDU Set; and
Figure 9 shows an arrangement whereby an RDI bit set to 1 indicates immediate QoS Reflection.

### Detailed description

As will be appreciated by one skilled in the art, aspects of this disclosure may be embodied as a system, apparatus, method, or program product. Accordingly, arrangements described herein may be implemented in an entirely hardware form, an entirely software form (including firmware, resident software, micro-code, etc.) or a form combining software and hardware aspects.

For example, the disclosed methods and apparatus may be implemented as a hardware circuit comprising custom very-large-scale integration ("VLSI") circuits or gate arrays, off-the-shelf semiconductors such as logic chips, transistors, or other discrete components. The disclosed methods and apparatus may also be implemented in programmable hardware devices such as field programmable gate arrays, programmable array logic, programmable logic devices, or the like. As another example, the disclosed methods and apparatus may include one or more physical or logical blocks of executable code which may, for instance, be organized as an object, procedure, or function.

Furthermore, the methods and apparatus may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In certain arrangements, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store, a program for use by or in connection with an instruction execution system, apparatus, or device.

Reference throughout this specification to an example of a particular method or apparatus, or similar language, means that a particular feature, structure, or characteristic described in connection with that example is included in at least one implementation of the method and apparatus described herein. Thus, reference to features of an example of a particular method or apparatus, or similar language, may, but do not necessarily, all refer to the same example, but mean "one or more but not all examples" unless expressly specified otherwise. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Furthermore, the described features, structures, or characteristics described herein may be combined in any suitable manner. In the following description, numerous specific details are provided, such as examples of programming, software modules, user selections, network transactions, database queries, database structures, hardware modules, hardware circuits, hardware chips, etc., to provide a thorough understanding of the disclosure. One skilled in the relevant art will recognize, however, that the disclosed methods and apparatus may be practiced without one or more of the specific details, or with other methods, components, materials, and so forth. In other instances, well-known structures, materials, or operations are not shown or described in detail to avoid obscuring aspects of the disclosure.

Aspects of the disclosed method and apparatus are described below with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams.

The code may also be loaded onto a computer, other programmable data processing apparatus, or other devices to cause a series of operational steps to be performed on the computer, other programmable apparatus, or other devices to produce a computer implemented process such that the code which executes on the computer or other programmable apparatus provides processes for implementing the functions/acts specified in the schematic flowchart diagrams and/or schematic block diagram.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

The description of elements in each figure may refer to elements of proceeding Figures. Like numbers refer to like elements in all Figures.

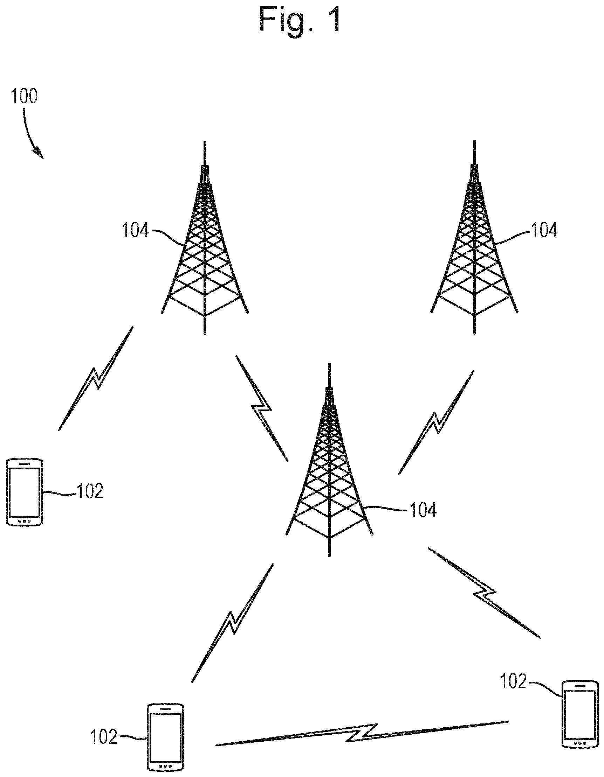

Figure 1 depicts an embodiment of a wireless communication system 100 for implementing quality of service of extended reality media over a wireless communications network. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to as an access point, an access terminal, a base, a base station, a Node-B, an eNB, a gNB, a Home Node-B, a relay node, a device, a core network, an aerial server, a radio access node, an AP, NR, a network entity, an Access and Mobility Management Function ("AMF"), a Unified Data Management Function ("UDM"), a Unified Data Repository ("UDR"), a UDM/UDR, a Policy Control Function ("PCF"), a Radio Access Network ("RAN"), an Network Slice Selection Function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), an application function, a service enabler architecture layer ("SEAL") function, a vertical application enabler server, an edge enabler server, an edge configuration server, a mobile edge computing platform function, a mobile edge computing application, an application data analytics enabler server, a SEAL data delivery server, a middleware entity, a network slice capability management server, or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with New Radio (NR) protocols standardized in 3GPP, wherein the network unit 104 transmits using an Orthogonal Frequency Division Multiplexing ("OFDM") modulation scheme on the downlink (DL) and the remote units 102 transmit on the uplink (UL) using a Single Carrier Frequency Division Multiple Access ("SC-FDMA") scheme or an OFDM scheme. More generally, however, the wireless communication system 100 may implement some other open or proprietary communication protocol, for example, WiMAX, IEEE 802.11 variants, GSM, GPRS, UMTS, LTE variants, CDMA2000, Bluetooth^{®}, ZigBee, Sigfox, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

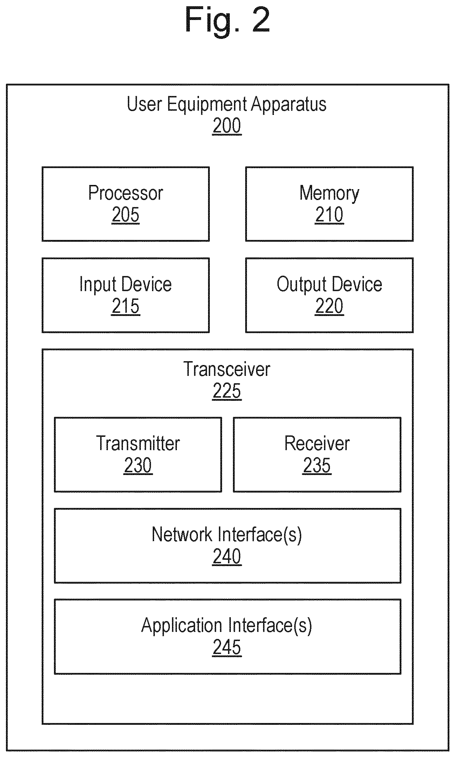

Figure 2 depicts a user equipment apparatus 200 that may be used for implementing the methods described herein. The user equipment apparatus 200 is used to implement one or more of the solutions described herein. The user equipment apparatus 200 is in accordance with one or more of the user equipment apparatuses described in embodiments herein. The user equipment apparatus 200 includes a processor 205, a memory 210, an input device 215, an output device 220, and a transceiver 225.

The input device 215 and the output device 220 may be combined into a single device, such as a touchscreen. In some implementations, the user equipment apparatus 200 does not include any input device 215 and/or output device 220. The user equipment apparatus 200 may include one or more of: the processor 205, the memory 210, and the transceiver 225, and may not include the input device 215 and/or the output device 220.

As depicted, the transceiver 225 includes at least one transmitter 230 and at least one receiver 235. The transceiver 225 may communicate with one or more cells (or wireless coverage areas) supported by one or more base units. The transceiver 225 may be operable on unlicensed spectrum. Moreover, the transceiver 225 may include multiple UE panels supporting one or more beams. Additionally, the transceiver 225 may support at least one network interface 240 and/or application interface 245. The application interface(s) 245 may support one or more APIs. The network interface(s) 240 may support 3GPP reference points, such as Uu, N1, PC5, etc. Other network interfaces 240 may be supported, as understood by one of ordinary skill in the art.

The processor 205 may include any known controller capable of executing computer-readable instructions and/or capable of performing logical operations. For example, the processor 205 may be a microcontroller, a microprocessor, a central processing unit ("CPU"), a graphics processing unit ("GPU"), an auxiliary processing unit, a field programmable gate array ("FPGA"), or similar programmable controller. The processor 205 may execute instructions stored in the memory 210 to perform the methods and routines described herein. The processor 205 is communicatively coupled to the memory 210, the input device 215, the output device 220, and the transceiver 225.

The processor 205 may control the user equipment apparatus 200 to implement the user equipment apparatus behaviors described herein. The processor 205 may include an application processor (also known as "main processor") which manages application-domain and operating system ("OS") functions and a baseband processor (also known as "baseband radio processor") which manages radio functions.

The memory 210 may be a computer readable storage medium. The memory 210 may include volatile computer storage media. For example, the memory 210 may include a RAM, including dynamic RAM ("DRAM"), synchronous dynamic RAM ("SDRAM"), and/or static RAM ("SRAM"). The memory 210 may include non-volatile computer storage media. For example, the memory 210 may include a hard disk drive, a flash memory, or any other suitable non-volatile computer storage device. The memory 210 may include both volatile and non-volatile computer storage media.

The memory 210 may store data related to implement a traffic category field as described herein. The memory 210 may also store program code and related data, such as an operating system or other controller algorithms operating on the apparatus 200.

The input device 215 may include any known computer input device including a touch panel, a button, a keyboard, a stylus, a microphone, or the like. The input device 215 may be integrated with the output device 220, for example, as a touchscreen or similar touch-sensitive display. The input device 215 may include a touchscreen such that text may be input using a virtual keyboard displayed on the touchscreen and/or by handwriting on the touchscreen. The input device 215 may include two or more different devices, such as a keyboard and a touch panel.

The output device 220 may be designed to output visual, audible, and/or haptic signals. The output device 220 may include an electronically controllable display or display device capable of outputting visual data to a user. For example, the output device 220 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 220 may include a wearable display separate from, but communicatively coupled to, the rest of the user equipment apparatus 200, such as a smart watch, smart glasses, a heads-up display, or the like. Further, the output device 220 may be a component of a smart phone, a personal digital assistant, a television, a table computer, a notebook (laptop) computer, a personal computer, a vehicle dashboard, or the like.

The output device 220 may include one or more speakers for producing sound. For example, the output device 220 may produce an audible alert or notification (e.g., a beep or chime). The output device 220 may include one or more haptic devices for producing vibrations, motion, or other haptic feedback. All, or portions, of the output device 220 may be integrated with the input device 215. For example, the input device 215 and output device 220 may form a touchscreen or similar touch-sensitive display. The output device 220 may be located near the input device 215.

The transceiver 225 communicates with one or more network functions of a mobile communication network via one or more access networks. The transceiver 225 operates under the control of the processor 205 to transmit messages, data, and other signals and also to receive messages, data, and other signals. For example, the processor 205 may selectively activate the transceiver 225 (or portions thereof) at particular times in order to send and receive messages.

The transceiver 225 includes at least one transmitter 230 and at least one receiver 235. The one or more transmitters 230 may be used to provide uplink communication signals to a base unit of a wireless communications network. Similarly, the one or more receivers 235 may be used to receive downlink communication signals from the base unit. Although only one transmitter 230 and one receiver 235 are illustrated, the user equipment apparatus 200 may have any suitable number of transmitters 230 and receivers 235. Further, the transmitter(s) 230 and the receiver(s) 235 may be any suitable type of transmitters and receivers. The transceiver 225 may include a first transmitter/receiver pair used to communicate with a mobile communication network over licensed radio spectrum and a second transmitter/receiver pair used to communicate with a mobile communication network over unlicensed radio spectrum.

The first transmitter/receiver pair may be used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. The first transmitter/receiver pair and the second transmitter/receiver pair may share one or more hardware components. For example, certain transceivers 225, transmitters 230, and receivers 235 may be implemented as physically separate components that access a shared hardware resource and/or software resource, such as for example, the network interface 240.

One or more transmitters 230 and/or one or more receivers 235 may be implemented and/or integrated into a single hardware component, such as a multi-transceiver chip, a system-on-a-chip, an Application-Specific Integrated Circuit ("ASIC"), or other type of hardware component. One or more transmitters 230 and/or one or more receivers 235 may be implemented and/or integrated into a multi-chip module. Other components such as the network interface 240 or other hardware components/circuits may be integrated with any number of transmitters 230 and/or receivers 235 into a single chip. The transmitters 230 and receivers 235 may be logically configured as a transceiver 225 that uses one more common control signals or as modular transmitters 230 and receivers 235 implemented in the same hardware chip or in a multi-chip module.

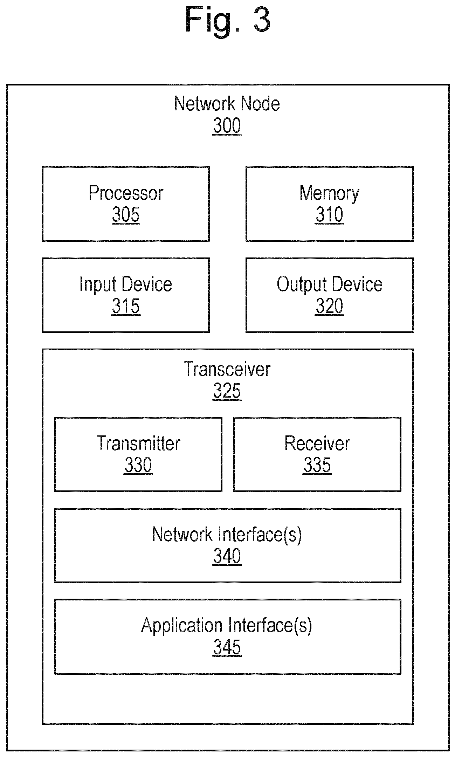

Figure 3 depicts further details of the network node 300 that may be used for implementing the methods described herein. The network node 300 includes a processor 305, a memory 310, an input device 315, an output device 320, and a transceiver 325.

The input device 315 and the output device 320 may be combined into a single device, such as a touchscreen. In some implementations, the network node 300 does not include any input device 315 and/or output device 320. The network node 300 may include one or more of: the processor 305, the memory 310, and the transceiver 325, and may not include the input device 315 and/or the output device 320.

As depicted, the transceiver 325 includes at least one transmitter 330 and at least one receiver 335. Here, the transceiver 325 communicates with one or more remote units 200. Additionally, the transceiver 325 may support at least one network interface 340 and/or application interface 345. The application interface(s) 345 may support one or more APIs. The network interface(s) 340 may support 3GPP reference points, such as Uu, N1, N2 and N3. Other network interfaces 340 may be supported, as understood by one of ordinary skill in the art.

The processor 305 may include any known controller capable of executing computer-readable instructions and/or capable of performing logical operations. For example, the processor 305 may be a microcontroller, a microprocessor, a CPU, a GPU, an auxiliary processing unit, a FPGA, or similar programmable controller. The processor 305 may execute instructions stored in the memory 310 to perform the methods and routines described herein. The processor 305 is communicatively coupled to the memory 310, the input device 315, the output device 320, and the transceiver 325.

The memory 310 may be a computer readable storage medium. The memory 310 may include volatile computer storage media. For example, the memory 310 may include a RAM, including dynamic RAM ("DRAM"), synchronous dynamic RAM ("SDRAM"), and/or static RAM ("SRAM"). The memory 310 may include non-volatile computer storage media. For example, the memory 310 may include a hard disk drive, a flash memory, or any other suitable non-volatile computer storage device. The memory 310 may include both volatile and non-volatile computer storage media.

The memory 310 may store data related to establishing a multipath unicast link and/or mobile operation. For example, the memory 310 may store parameters, configurations, resource assignments, policies, and the like, as described herein. The memory 310 may also store program code and related data, such as an operating system or other controller algorithms operating on the network node 300.

The input device 315 may include any known computer input device including a touch panel, a button, a keyboard, a stylus, a microphone, or the like. The input device 315 may be integrated with the output device 320, for example, as a touchscreen or similar touch-sensitive display. The input device 315 may include a touchscreen such that text may be input using a virtual keyboard displayed on the touchscreen and/or by handwriting on the touchscreen. The input device 315 may include two or more different devices, such as a keyboard and a touch panel.

The output device 320 may be designed to output visual, audible, and/or haptic signals. The output device 320 may include an electronically controllable display or display device capable of outputting visual data to a user. For example, the output device 320 may include, but is not limited to, an LCD display, an LED display, an OLED display, a projector, or similar display device capable of outputting images, text, or the like to a user. As another, non-limiting, example, the output device 320 may include a wearable display separate from, but communicatively coupled to, the rest of the network node 300, such as a smart watch, smart glasses, a heads-up display, or the like. Further, the output device 320 may be a component of a smart phone, a personal digital assistant, a television, a table computer, a notebook (laptop) computer, a personal computer, a vehicle dashboard, or the like.

The output device 320 may include one or more speakers for producing sound. For example, the output device 320 may produce an audible alert or notification (e.g., a beep or chime). The output device 320 may include one or more haptic devices for producing vibrations, motion, or other haptic feedback. All, or portions, of the output device 320 may be integrated with the input device 315. For example, the input device 315 and output device 320 may form a touchscreen or similar touch-sensitive display. The output device 320 may be located near the input device 315.

The transceiver 325 includes at least one transmitter 330 and at least one receiver 335. The one or more transmitters 330 may be used to communicate with the UE, as described herein. Similarly, the one or more receivers 335 may be used to communicate with network functions in the PLMN and/or RAN, as described herein. Although only one transmitter 330 and one receiver 335 are illustrated, the network node 300 may have any suitable number of transmitters 330 and receivers 335. Further, the transmitter(s) 330 and the receiver(s) 335 may be any suitable type of transmitters and receivers.

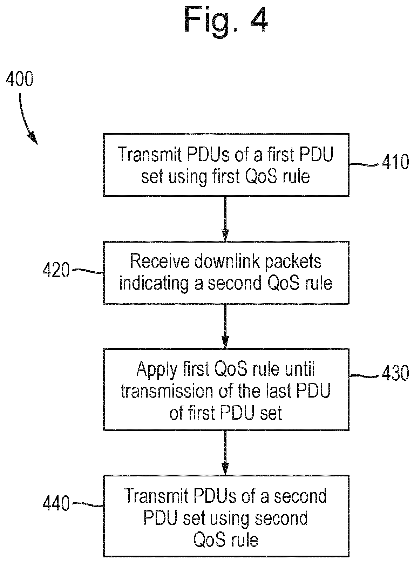

Figure 4 illustrates a method 400 in a user equipment of a wireless communication network. The method 400 comprises transmitting 410, via a first data radio bearer, Protocol Data Units (PDUs) of a first PDU set using a first quality of service (QoS) mapping rule. The method 400 further comprises: receiving 420 downlink packets for the data radio bearer containing header information including at least one QoS parameter indicating a second QoS mapping rule; applying 430 the first QoS mapping rule to uplink transmissions on said data radio bearer until the transmission of the last PDU of the first PDU set; and transmitting 440 PDUs of a second PDU set using the second QoS mapping rule.

Such a method tends to ensure that the PDUs of a PDU set are treated according to a same set of QoS requirements even when reflective QoS is implemented. That the PDUs of a PDU set are subject to the same QoS requirements and associated constraints of delay budget and error rate is important for the timely delivery of the data contained within the PDU set. This tends to improve the granularity of legacy 5G QoS flow framework allowing the RAN to optimize the mapping between QoS flow and DRBs to meet, for example, stringent XR media requirements such as high-rate transmissions with short delay budget.

The header information may be a service data adaptation protocol (SDAP) header. A data radio bearer (DRB) may carry packets from multiple QoS flows. A QoS mapping rule dictates from which QoS flow PDUs will be carried in a certain DRB. The PDUs of the second PDU set may be transmitted via a second data radio bearer. The PDUs of the second PDU set may be transmitted via the same data radio bearer as the PDUs of the first PDU set, or a different data radio bearer. A QoS mapping rule change may mean that packets from a certain QoS flow may instead of a first DRB, be mapped to a different, second DRB. The second DRB may exist in parallel with the first DRB.

The method may further comprise saving the second QoS mapping rule to a packet filter. The packet filter may be applied on a QoS flow indicated by the new QoS mapping rule received in the downlink for the data radio bearer.

The QoS parameter may comprise a QoS flow identifier (QFI) value. Each PDU set comprises one or more PDUs carrying the payload of a unit of information generated at an application level. The unit of information may comprise an application data unit. The unit of information may comprise a frame or video slice. The unit of information may be for an XRM service.

A Reflective QoS flow to Data radio bearer mapping Indication (RDI) bit received in DL Data PDU with SDAP header may be used to indicate to the user equipment the change of QoS mapping rule from the first QoS mapping rule to the second QoS mapping rule.

The method may further comprise sending an end marker on the data radio bearer when the applied QoS mapping rule is changed. The QoS mapping rule may be changed from the first QoS mapping rule to the second QoS mapping rule.

There is further provided a user equipment of a wireless communication network, the user equipment comprising a transmitter, a receiver, and a processor. The transmitter is arranged to transmit, via a data radio bearer, Protocol Data Units (PDUs) of a first PDU set using a first quality of service (QoS) mapping rule. The receiver is arranged to receive downlink packets for the data radio bearer containing header information including at least one QoS parameter indicating a second QoS mapping rule. The processor is arranged to apply the first QoS mapping rule to uplink transmissions on said data radio bearer until the transmission of the last PDU of the first PDU set. The transmitter is further arranged to transmit PDUs of a second PDU set using the second QoS mapping rule.

Such a user equipment tends to ensure that the PDUs of a PDU set are treated according to a same set of QoS requirements even when reflective QoS is implemented. That the PDUs of a PDU set are subject to the same QoS requirements and associated constraints of delay budget and error rate is important for the timely delivery of the data contained within the PDU set. This tends to improve the granularity of legacy 5G QoS flow framework allowing the RAN to optimize the mapping between QoS flow and DRBs to meet, for example, stringent XR media requirements such as high-rate transmissions with short delay budget.

The header information may be a service data adaptation protocol (SDAP) header. A data radio bearer (DRB) may carry packets from multiple QoS flows. A QoS mapping rule dictates from which QoS flow PDUs will be carried in a certain DRB. The PDUs of the second PDU set may be transmitted via the same data radio bearer as the PDUs of the first PDU set, or a different data radio bearer. A QoS mapping rule change may mean that packets from a certain QoS flow may instead of a first DRB, be mapped to a different, second DRB. The second DRB may exist in parallel with the first DRB.

The user equipment may further comprise a storage element arranged to save the second QoS mapping rule to a packet filter. The packet filter may be applied on a QoS flow indicated by the new QoS mapping rule received in the downlink for the data radio bearer. The QoS parameter may comprises a QoS flow identifier (QFI) value.

Each PDU set may comprise one or more PDUs carrying the payload of a unit of information generated at an application level. The unit of information may comprise an application data unit. The unit of information may comprise a frame or video slice. The unit of information may be for an XRM service.

A Reflective QoS flow to Data radio bearer mapping Indication (RDI) bit received in DL Data PDU with SDAP header may be used to indicate to the user equipment the change of QoS mapping rule from the first QoS mapping rule to the second QoS mapping rule.

The transmitter may be further arranged to send an end marker on the data radio bearer when the applied QoS mapping rule is changed. The QoS mapping rule may be changed from the first QoS mapping rule to the second QoS mapping rule.

Reflective QoS is controlled on per-packet basis by using the Reflective QoS Indication (RQI) in the encapsulation header on N3 (and N9) reference point together with the QFI and together with a Reflective QoS Timer (RQ Timer) value that is either signalled to the UE upon PDU Session Establishment (or upon PDU Session Modification as described in 3GPP TS 23.501 v17.5.0, clause 5.17.2.2.2) or set to a default value. The RQ Timer value provided by the core network is at the granularity of PDU Session (the details are specified in 3GPP TS 24.501 v17.7.1 ).

When the 5GC determines that Reflective QoS has to be used for a specific SDF belonging to a QoS Flow, the Session Management Function (SMF) shall provide the RQA (Reflective QoS Attribute) within the QoS Flow's QoS profile to the NG-RAN on N2 reference point unless it has been done so before. When the RQA has been provided to the NG-RAN for a QoS Flow and the 5GC determines that the QoS Flow carries no more Service Data Flows (SDFs) for which Reflective QoS has to be used, the SMF should signal the removal of the RQA (Reflective QoS Attribute) from the QoS Flow's QoS profile to the NG-RAN on N2 reference point.

In some arrangements, the SMF may have a timer to delay the sending of the removal of the RQA. This avoids signalling to the RAN in the case of new SDFs subject to Reflective QoS are bound to this QoS Flow in the meantime.

When the 5GC determines to use Reflective QoS for a specific SDF, the SMF shall ensure that the user plane function (UPF) applies the RQI marking for this SDF. The RQI marking may comprise setting the indication to use Reflective QoS in the QER associated with the DL packet detection rule (PDR) if not already set. The SMF shall also ensure that the uplink packets for this SDF can be received by the UPF from the QoS Flow to which the DL PDR of the SDF is associated with as specified in 3GPP TS 29.244 v17.5.0. For example, the SMF may generate a new UL PDR for this SDF for that QoS Flow and provide it to the UPF.

When the UPF is instructed by the SMF to apply RQI marking, the UPF shall set the RQI in the encapsulation header on the N3 (or N9) reference point for every DL packet corresponding to this SDF.

When an RQI is received by (R)AN in a DL packet on N3 reference point, the (R)AN shall indicate to the UE the QFI and the RQI of that DL packet.

Upon reception of a DL packet with RQI: if a UE derived QoS rule with a Packet Filter corresponding to the DL packet does *not* already exist, then: the UE shall create a new UE derived QoS rule with a Packet Filter corresponding to the DL packet; and the UE shall start, for this UE derived QoS rule, a timer set to the RQ Timer value.

If a UE derived QoS rule with a Packet Filter corresponding to the DL packet *does* already exist: the UE shall restart the timer associated to this UE derived QoS rule; and if the QFI associated with the downlink packet is different from the QFI associated with the UE derived QoS rule, the UE shall update this UE derived QoS rule with the newly received QFI.

In certain arrangements, Non-3GPP Access Networks (ANs) do not need N2 signalling to enable Reflective QoS. Non-3GPP accesses are expected to send transparently the QFI and RQI to the UE. If the UPF does not include the RQI, no UE derived QoS rule will be generated. If RQI is included to assist the UE to trigger an update of the UE derived QoS rule, the reception of PDU for a QFI restarts the RQ Timer.

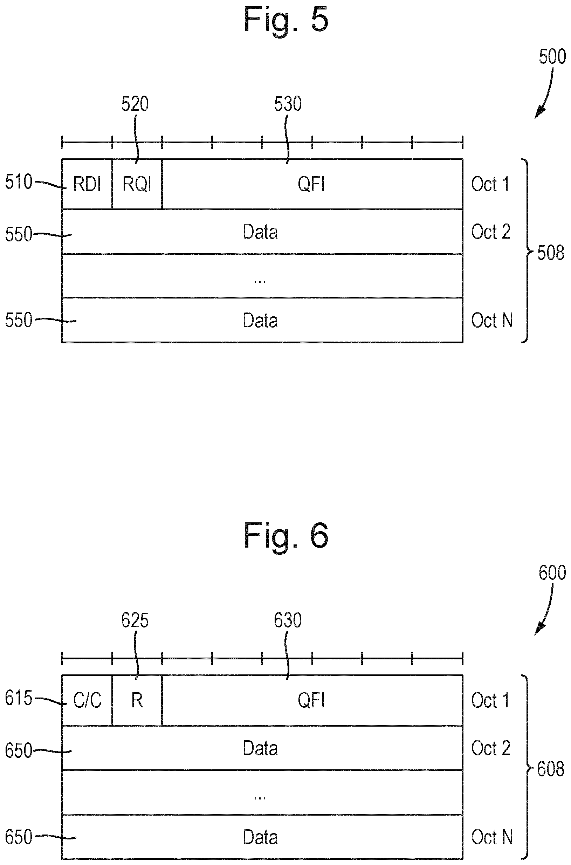

Figure 5 illustrates the format of SDAP Data PDU of a downlink packet 500 configured with an SDAP header. The downlink packet 500 comprises a plurality of octets 508. The first octet comprises a Reflective QoS flow to DRB mapping Indication (RDI) 510, a Reflective QoS Indication (RQI) 520, and a QoS flow identifier (QFI) 530. The remaining octets comprise data 550.

The RDI field 510 has a length of 1 bit and indicates whether QoS flow to DRB mapping rule should be updated.

**Table 1: RDI field**

| **Bit** | **Description** |
|---|---|
| 0 | No action |
| 1 | To store QoS flow to DRB mapping rule. |

The RQI field 520 has a length of 1 bit. and indicates whether NAS should be informed of the update of SDF to QoS flow mapping rules (3GPP TS 23.501 v17.5.0).

**Table 2: RQI field**

| **Bit** | **Description** |
|---|---|
| 0 | No action |
| 1 | To inform NAS that RQI bit is set to 1. |

Figure 6 illustrates the format of SDAP Data PDU of an uplink packet 600 configured with an SDAP header. The downlink packet 600 comprises a plurality of octets 608. The first octet comprises a 1-bit D/C field 615, a reserved field R, 625, and a QoS flow identifier (QFI) 630. The 1-bit D/C field 615 is set to zero to indicate a control PDU. The remaining octets comprise data 650.

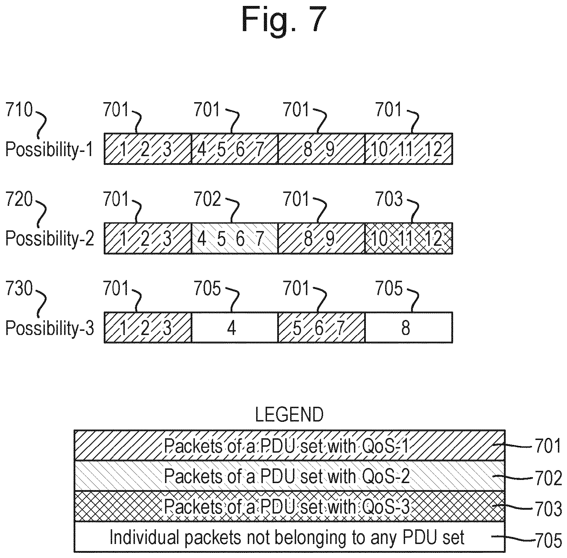

Figure 7 shows three different possibilities 710, 720 and 730, for required QoS applicable to each PDU and PDU Set of a QoS flow. Each illustrated possibility comprises four PDU sets, each PDU set comprises between 1 and 4 PDUs, the individual PDUs represented by numbers in figure 7. As shown in the legend, four possible classifications of PDUs are present in this example: packets of a PDU set with QoS-1, 701; packets of a PDU set with QoS-2, 702, packets of a PDU set with QoS-3, 703, and individual packets not belonging to any PDU set, 705.

In the first possibility (Possibility-1) 710, all the PDU Sets are to be treated with the same QoS and therefore each PDU experiences the same QoS treatment, in this case each packet has QoS-1 701 applied thereto.

In the second possibility (Possibility-2) 720, the first and the third PDU Sets with PDUs 1 - 3 and 8 - 9 are to be treated with QoS-1 701 and therefore each of these 5 PDUs will experience the same QoS treatment, different from the PDUs of the second (4 - 7) and fourth (10 - 12) PDU sets, which are treated with QoS-2 702 and QoS-3 703 respectively.

In the third possibility (Possibility-3) 730, all the PDU Sets are to be treated with QoS-1 701 and therefore each PDU belonging to a PDU set will experience the same QoS treatment, QoS-1 701. However, PDUs not belonging to any PDU set (e.g., PDUs 4 and 8) are treated as not having a particular QoS, 705 . For practical purposes it is assumed in the solutions disclosed herein that a PDU not part of any PDU set is a part of its own PDU set (i.e., its PDU set contains only one PDU).

Figure 7 represents downlink packets. In a corresponding uplink direction the mapping of QoS Flows to DRBs can also be controlled by using Reflective QoS mapping.

In operation, for each DRB, the UE monitors the QFI(s) of the downlink packets and applies the same mapping in the uplink; that is, for a DRB, the UE maps the uplink packets belonging to the QoS flows(s) corresponding to the QFI(s) and PDU Session observed in the downlink packets for that DRB. Once the QoS mapping has been started, based on the latest available QFI(s) received in DL, the same QoS mapping rule is saved and used until the transmission of the current ongoing UL PDU Set is complete i.e., all PDUs of an PDU set will use the same QoS mapping rule as used for the very first PDU of the corresponding PDU set. In other words, UE maps the uplink PDUs of a PDU set belonging to QoS flows(s) corresponding to the QFI(s) and PDU Session observed in the downlink packets for that DRB and applies the latest update of the mapping rules only at the start of a transmission for the next UL PDU Set; the PDUs of the current PDU set in transmission may only use the stored/ current QoS mapping rule. To enable this reflective mapping, the NG-RAN marks downlink packets over Uu with QFI.

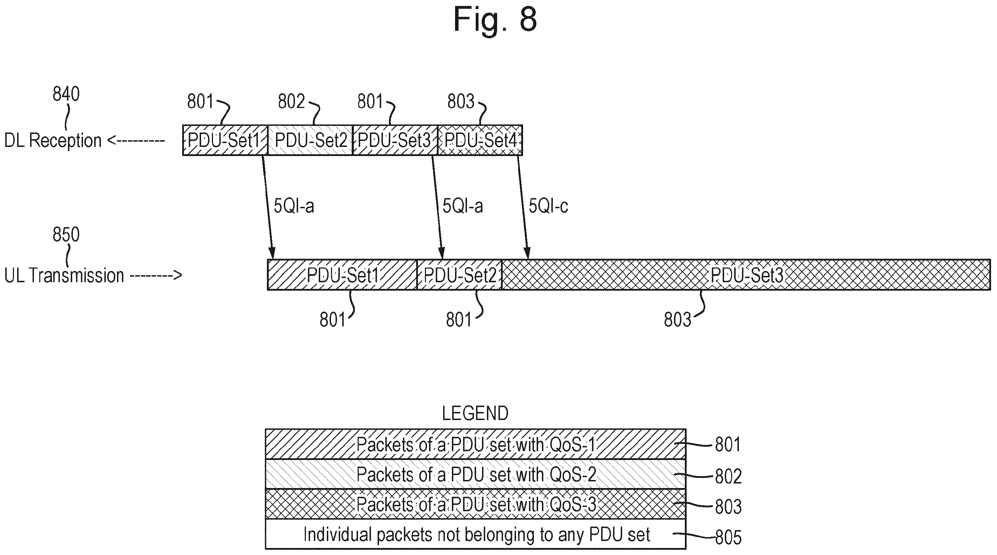

Figure 8 shows the UE applying the latest update of the mapping rules only at the start of a transmission for the next UL PDU Set. The legend shows four possible classifications of packets: packets of a PDU set with QoS-1, 801; packets of a PDU set with QoS-2, 802, packets of a PDU set with QoS-3, 803, and individual packets not belonging to any PDU set 805. For example, PDU-Set1 in UL 850 uses the latest QoS mapping (QFI(s)) available at that point i.e., QoS-1 801 from PDU-Set1 received in DL 840; whereas PDU-Set2 in UL 850 uses the latest QoS mapping (QFI(s)) available at that point i.e., QoS-1 801 from PDU-Set3 received in DL 840 (and not QoS-2 802 from PDU-Set2 in DL 840). At the time of transmission of PDU-Set3 in UL 850, the QoS attributes of QoS-3 803 (5QI-c) will be used corresponding to the QFI(s) of QoS-3 803 received in the DL 840 reception of PDU-Set4.

In some arrangements, when a QoS flow to DRB mapping rule is updated, the UE sends an end marker on the old bearer. The received RQI bit (set to 1) received in DL Data PDU with SDAP header, as shown in Figure 5, from DL reception is indicated to NAS informing it of the updated of SDF to QoS flow mapping rules only when the transmission of the current ongoing PDU Set is finished or at least when the last PDU of the PDU set is transmitted or being transmitted.

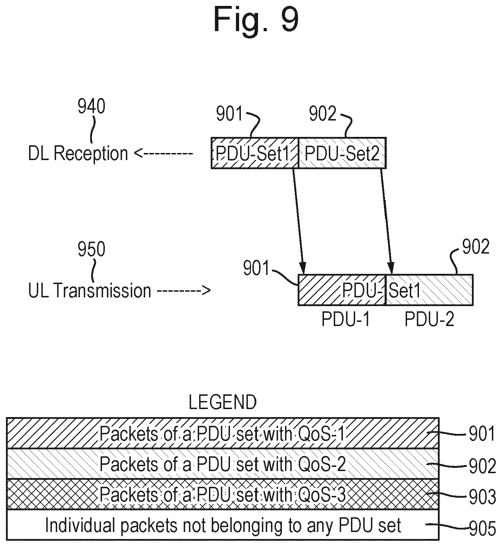

In an alternative mode of operation, the RDI bit received in DL Data PDU with SDAP header, as shown in Figure 5, indicates whether QoS flow to DRB mapping rule should be updated. When a UE receives RDI bit set to 1, it immediately starts to map the uplink PDUs belonging to the QoS flows(s) corresponding to the QFI(s) and PDU Session observed in the downlink packets for that DRB, without waiting until the start of the next PDU set. Such a mode of operation may not be covered by the appended claims. Figure 9 shows an arrangement whereby an RDI bit set to 1 indicates immediate QoS Reflection. The legend of figure 9 shows four possible classifications of packets: packets of a PDU set with QoS-1, 901; packets of a PDU set with QoS-2, 902, packets of a PDU set with QoS-3, 903, and individual packets not belonging to any PDU set 905. Uplink 950 PDUs PDU-1 and PDU-2 belong to PDU set-1 but the UE starts to map the PDU-2 corresponding to the QFI(s) and PDU Session observed in the downlink PDU set2 for that DRB. PDU-1 in the uplink 950 uses QoS-1 901, reflecting PDU set-1 in the downlink 940. PDU-2 in the uplink 950 uses QoS-2 902, reflecting PDU set-2 in the downlink 940.

Accordingly, a UE may map the uplink PDUs of a PDU set belonging to QoS flows(s) corresponding to the QFI(s) and PDU Session observed in the downlink packets for that DRB and applies the latest update of the mapping rules only at the start of a transmission for the next UL PDU Set; the PDUs of the current PDU set in transmission may only use the stored and/or current QoS mapping rule.

An RQI bit (set to 1) received in DL Data PDU with SDAP header may be indicated to NAS only after the transmission of the current ongoing PDU Set is finished or at least not until when the last PDU of the PDU set is transmitted or being transmitted.

An alternative mode of operation is provided such that when a UE receives RDI bit set to 1, it immediately starts to map the uplink PDUs belonging to the QoS flows(s) corresponding to the QFI(s) and PDU Session observed in the downlink packets for that DRB, without waiting until the start of the next PDU set.

Accordingly, there is provided a method comprising: receiving downlink packets for a DRB containing SDAP header information including at least a QFI value; applying the current QoS mapping rule to UL transmission on the said bearer until the transmission of the last PDU of the corresponding PDU set under transmission has started; saving the received QoS mapping rule configuration to a packet filter according to the received QFI for the said bearer; considering the saved QoS mapping rule as the current QoS mapping rule for the said bearer once the last PDU of the corresponding PDU set under transmission is transmitted; applying the current QoS mapping rule to UL transmission on the said bearer.

A PDU set may be composed of one or more PDUs carrying the payload of one unit of information generated at the application level (e.g. a frame or video slice for XRM Services).

An RDI bit received in DL Data PDU with SDAP header may be used to indicate to the UE about a change of QoS mapping rule.

It should be noted that the above-mentioned methods and apparatus illustrate rather than limit the invention, and that those skilled in the art will be able to design many alternative arrangements without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

Further, while examples have been given in the context of particular communications standards, these examples are not intended to be the limit of the communications standards to which the disclosed method and apparatus may be applied. For example, while specific examples have been given in the context of 3GPP, the principles disclosed herein can also be applied to another wireless communications system, and indeed any communications system which uses routing rules.

The method may also be embodied in a set of instructions, stored on a computer readable medium, which when loaded into a computer processor, Digital Signal Processor (DSP) or similar, causes the processor to carry out the hereinbefore described methods.

The described methods and apparatus may be practiced in other specific forms. The described methods and apparatus are to be considered in all respects only as illustrative and not restrictive. The scope of the invention is, therefore, indicated by the appended claims rather than by the foregoing description.

The following abbreviations are relevant in the field of the present disclosure: 3GPP, 3rd generation partnership project; 5G, fifth generation; 5GS, 5G System; 5QI, 5G QoS Identifier; AF, application function; AMF, access and mobility function; AR, augmented reality; DL, downlink; DRB, Data Radio Bearer; NAL, network abstraction layer; PCF, policy control function; PDU, packet data unit; PPS, picture parameter set; QFI, QoS flow identifier; QoE, quality of experience; QoS, quality of service; PDR, Packet Detection Rule; RAN, radio access network; RTCP, real-time control protocol; RTP, real-time protocol; RDI, Reflective QoS flow to DRB mapping Indication; RQI, Reflective QoS Indication; SDAP, service data adaptation protocol; SDF, service data flow; SMF, session management function; SRTCP, secure real-time control protocol; SRTP, secure real-time protocol; UE, user equipment; UL, uplink; UPF, user plane function; VCL, video coding layer; VMAF, video multi-method assessment function; VPS, video parameter set; VR , virtual reality; XR, extended reality; XR AS, XR application server; and XRM, XR media.

## Claims

1. A method performed by a user equipment, UE, (102), the method comprising:
transmitting (410), via a data radio bearer, Protocol Data Units, PDUs, of a first PDU set using a first quality of service, QoS, mapping rule;
receiving (420) downlink packets for the data radio bearer containing header information including at least one QoS parameter indicating a second QoS mapping rule;
applying (430) the first QoS mapping rule to uplink transmissions on the data radio bearer until a transmission of a last PDU of the first PDU set; and
transmitting (440) PDUs of a second PDU set using the second QoS mapping rule.

2. The method of claim 1, comprising saving the second QoS mapping rule to a packet filter.

3. The method of claim 1 or 2, wherein the at least one QoS parameter comprises a QoS flow identifier, QFI, value.

4. The method of any of claims 1, 2 or 3, wherein each PDU set comprises one or more PDUs carrying payload of a unit of information generated at an application level.

5. The method of any preceding claim, wherein a Reflective QoS flow to Data radio bearer mapping Indication, RDI, bit received in DL Data PDU with SDAP header is used to indicate to the UE (102) the change of QoS mapping rule from the first QoS mapping rule to the second QoS mapping rule.

6. The method of any preceding claim, comprising sending an end marker on the data radio bearer when the applied QoS mapping rule is changed.

7. A user equipment, UE, (102)for wireless communication, the UE (102) comprising:
at least one memory (210); and
at least one processor (205) coupled with the at least one memory (210) and configured to cause the UE (102) to:
transmit (410), via a data radio bearer, Protocol Data Units, PDUs, of a first PDU set using a first quality of service, QoS, mapping rule;
receive (420) downlink packets for the data radio bearer containing header information including at least one QoS parameter indicating a second QoS mapping rule;
apply (430) the first QoS mapping rule to uplink transmissions on the data radio bearer until a transmission of a last PDU of the first PDU set; and
transmit (440) PDUs of a second PDU set using the second QoS mapping rule.

8. The UE (102) of claim 7, wherein the at least one processor (205) is configured to cause the UE (102) to save the second QoS mapping rule to a packet filter.

9. The UE (102) of claim 7 or 8, wherein the at least one QoS parameter comprises a QoS flow identifier, QFI, value.

10. The UE (102) of any of claims 7, 8 or 9, wherein each PDU set comprises one or more PDUs carrying the payload of a unit of information generated at an application level.

11. The UE (102) of any of claims 7 to 10, wherein a Reflective QoS flow to Data radio bearer mapping Indication, RDI, bit received in DL Data PDU with SDAP header is used to indicate to the UE (102) the change of QoS mapping rule from the first QoS mapping rule to the second QoS mapping rule.

12. The UE (102) of any of claims 7 to 11, wherein the at least one processor (205) is configured to cause the UE (102) to send an end marker on the data radio bearer when the applied QoS mapping rule is changed.

13. A processor (205) for wireless communication, the processor (205) being configured to:
transmit (410), via a data radio bearer, Protocol Data Units, PDUs, of a first PDU set using a first quality of service, QoS, mapping rule;
receive (420) downlink packets for the data radio bearer containing header information including at least one QoS parameter indicating a second QoS mapping rule;
apply (430) the first QoS mapping rule to uplink transmissions on the data radio bearer until a transmission of a last PDU of the first PDU set; and
transmit (440) PDUs of a second PDU set using the second QoS mapping rule.

## Patentansprüche

1. Verfahren, das von einem Benutzergerät, UE, (102) ausgeführt wird, wobei das Verfahren umfasst:
Senden (410), über einen Datenfunkträger, von Protokoll-Dateneinheiten, PDUs, eines ersten PDU-Satzes unter Verwendung einer ersten Zuordnungsregel für die Dienstgüte, QoS;
Empfangen (420) von Downlink-Paketen für den Datenfunkträger, die Header-Informationen enthalten, die mindestens einen QoS-Parameter beinhalten, der eine zweite QoS-Zuordnungsregel angibt;
Anwenden (430) der ersten QoS-Zuordnungsregel auf Uplink-Übertragungen auf dem Datenfunkträger, bis eine Übertragung einer letzten PDU des ersten PDU-Satzes erfolgt; und
Senden (440) von PDUs eines zweiten PDU-Satzes unter Verwendung der zweiten QoS-Zuordnungsregel.

2. Verfahren nach Anspruch 1, umfassend das Speichern der zweiten QoS-Zuordnungsregel in einem Paketfilter.

3. Verfahren nach Anspruch 1 oder 2, wobei der mindestens eine QoS-Parameter einen Wert für die QoS-Flusskennung, QFI, umfasst.

4. Verfahren nach einem der Ansprüche 1, 2 oder 3, wobei jeder PDU-Satz eine oder mehrere PDUs umfasst, die Nutzdaten einer auf Anwendungsebene erzeugten Informationseinheit übertragen.

5. Verfahren nach einem der vorhergehenden Ansprüche, wobei ein Reflective QoS Flow to Data Radio Bearer Mapping Indication, RDI, -Bit, das in einer DL-Daten-PDU mit SDAP-Header empfangen wird, verwendet wird, um dem UE (102) die Änderung der QoS-Zuordnungsregel von der ersten QoS-Zuordnungsregel zur zweiten QoS-Zuordnungsregel anzugeben.

6. Verfahren nach einem der vorhergehenden Ansprüche, umfassend das Senden eines Endmarkers auf dem Datenfunkträger, wenn die angewandte QoS-Zuordnungsregel geändert wird.

7. Benutzergerät (UE) (102) für die drahtlose Kommunikation, wobei das UE (102) umfasst:
mindestens einen Speicher (210); und
mindestens einen Prozessor (205), der mit dem mindestens einen Speicher (210) gekoppelt und konfiguriert ist, zu bewirken, dass das UE (102):
über einen Datenfunkträger Protokolldateneinheiten, PDUs, eines ersten PDU-Satzes unter Verwendung einer ersten QoS-Zuordnungsregel sendet (410);
Downlink-Pakete für den Datenfunkträger empfängt (420), die Header-Informationen enthalten, die mindestens einen QoS-Parameter beinhalten, der eine zweite QoS-Zuordnungsregel angibt;
die erste QoS-Zuordnungsregel auf Uplink-Übertragungen auf dem Datenfunkträger anwendet (430), bis eine Übertragung einer letzten PDU des ersten PDU-Satzes erfolgt; und
PDUs eines zweiten PDU-Satzes unter Verwendung der zweiten QoS-Zuordnungsregel sendet (440).

8. UE (102) nach Anspruch 7, wobei der mindestens eine Prozessor (205) dazu konfiguriert ist, zu bewirken, dass das UE (102) die zweite QoS-Zuordnungsregel in einem Paketfilter speichert.

9. UE (102) nach Anspruch 7 oder 8, wobei der mindestens eine QoS-Parameter einen Wert für die QoS-Flusskennung, QFI, umfasst.

10. UE (102) nach einem der Ansprüche 7, 8 oder 9, wobei jeder PDU-Satz eine oder mehrere PDUs umfasst, die die Nutzlast einer auf Anwendungsebene erzeugten Informationseinheit übertragen.

11. UE (102) nach einem der Ansprüche 7 bis 10, wobei ein Reflective QoS Flow to Data Radio Bearer Mapping Indication, RDI, -Bit, das in einer DL-Daten-PDU mit SDAP-Header empfangen wird, verwendet wird, um dem UE (102) die Änderung der QoS-Zuordnungsregel von der ersten QoS-Zuordnungsregel zur zweiten QoS-Zuordnungsregel anzugeben.

12. UE (102) nach einem der Ansprüche 7 bis 11, wobei der mindestens eine Prozessor (205) dazu konfiguriert ist, zu bewirken, dass das UE (102) einen Endmarker auf dem Datenfunkträger sendet, wenn die angewandte QoS-Zuordnungsregel geändert ist.

13. Prozessor (205) für die drahtlose Kommunikation, wobei der Prozessor (205) dazu konfiguriert ist, um:
über einen Datenfunkträger Protokoll-Dateneinheiten, PDUs, eines ersten PDU-Satzes unter Verwendung einer ersten Zuordnungsregel für die Dienstgüte, QoS, zu senden (410);
Downlink-Pakete für den Datenfunkträger zu empfangen (420), die Header-Informationen enthalten, die mindestens einen QoS-Parameter beinhalten, der eine zweite QoS-Zuordnungsregel angibt;
die erste QoS-Zuordnungsregel auf Uplink-Übertragungen auf dem Datenfunkträger anzuwenden (430), bis eine Übertragung einer letzten PDU des ersten PDU-Satzes erfolgt ist; und
PDUs eines zweiten PDU-Satzes unter Verwendung der zweiten QoS-Zuordnungsregel zu senden (440).

## Revendications

1. Procédé mis en œuvre par un équipement utilisateur, UE, (102), le procédé comprenant :
la transmission (410), via un support radio de données, d'unités de données de protocole, PDU, d'un premier ensemble de PDU à l'aide d'une première règle de mappage de qualité de service, QoS ;
la réception (420) de paquets de liaison descendante pour le support radio de données contenant des informations d'en-tête incluant au moins un paramètre QoS indiquant une deuxième règle de mappage QoS ;
l'application (430) de la première règle de mappage QoS aux transmissions de liaison montante sur le support radio de données jusqu'à une transmission d'une dernière PDU du premier ensemble de PDU ; et
la transmission (440) de PDU d'un deuxième ensemble de PDU à l'aide de la deuxième règle de mappage QoS.

2. Procédé selon la revendication 1, comprenant l'enregistrement de la deuxième règle de mappage QoS dans un filtre de paquets.

3. Procédé selon la revendication 1 ou 2, dans lequel l'au moins un paramètre QoS comprend une valeur d'identifiant de flux QoS, QFI.

4. Procédé selon l'une quelconque des revendications 1, 2 ou 3, dans lequel chaque ensemble de PDU comprend une ou plusieurs PDU transportant la charge utile d'une unité d'information générée au niveau d'une application.

5. Procédé selon l'une quelconque des revendications précédentes, dans lequel un bit d'indication de mappage réflexif d'un flux QoS vers un support radio de données, RDI, reçu dans une PDU de données DL avec en-tête SDAP est utilisé pour indiquer à l'UE (102) le changement de règle de mappage QoS de la première règle de mappage QoS vers la deuxième règle de mappage QoS.

6. Procédé selon l'une quelconque des revendications précédentes, comprenant l'envoi d'un marqueur de fin sur le support radio de données lorsque la règle de mappage QoS appliquée est changée.

7. Équipement utilisateur, UE, (102) pour communication sans fil, l'UE (102) comprenant :
au moins une mémoire (210) ; et
au moins un processeur (205) couplé à l'au moins une mémoire (210) et configuré pour amener l'UE (102) à :
transmettre (410), via un support radio de données, des unités de données de protocole, PDU, d'un premier ensemble de PDU à l'aide d'une première règle de mappage de qualité de service, QoS ;
recevoir (420) des paquets de liaison descendante pour le support radio de données contenant des informations d'en-tête incluant au moins un paramètre QoS indiquant une deuxième règle de mappage QoS ;
appliquer (430) la première règle de mappage QoS aux transmissions de liaison montante sur le support radio de données jusqu'à une transmission d'une dernière PDU du premier ensemble de PDU ; et
transmettre (440) des PDU d'un deuxième ensemble de PDU à l'aide de la deuxième règle de mappage QoS.

8. UE (102) selon la revendication 7, dans lequel l'au moins un processeur (205) est configuré pour amener l'UE (102) à enregistrer la deuxième règle de mappage QoS dans un filtre de paquets.

9. UE (102) selon la revendication 7 ou 8, dans lequel l'au moins un paramètre QoS comprend une valeur d'identifiant de flux QoS, QFI.

10. UE (102) selon l'une quelconque des revendications 7, 8 ou 9, dans lequel chaque ensemble de PDU comprend une ou plusieurs PDU transportant la charge utile d'une unité d'information générée au niveau d'une application.

11. UE (102) selon l'une quelconque des revendications 7 à 10, dans lequel un bit d'indication de mappage réflexif d'un flux QoS vers un support radio de données, RDI, reçu dans une PDU de données DL avec en-tête SDAP est utilisé pour indiquer à l'UE (102) le changement de règle de mappage QoS de la première règle de mappage QoS vers la deuxième règle de mappage QoS.

12. UE (102) selon l'une quelconque des revendications 7 à 11, dans lequel l'au moins un processeur (205) est configuré pour amener l'UE (102) à envoyer un marqueur de fin sur le support radio de données lorsque la règle de mappage QoS appliquée est changée.

13. Processeur (205) pour communication sans fil, le processeur (205) étant configuré pour :
transmettre (410), via un support radio de données, des unités de données de protocole, PDU, d'un premier ensemble de PDU à l'aide d'une première règle de mappage de qualité de service, QoS ;
recevoir (420) des paquets de liaison descendante pour le support radio de données contenant des informations d'en-tête incluant au moins un paramètre QoS indiquant une deuxième règle de mappage QoS ;
appliquer (430) la première règle de mappage QoS aux transmissions de liaison montante sur le support radio de données jusqu'à une transmission d'une dernière PDU du premier ensemble de PDU ; et
transmettre (440) des PDU d'un deuxième ensemble de PDU à l'aide de la deuxième règle de mappage QoS.
